# EUROPEAN PATENT SPECIFICATION

(11) **EP 4 251 707 B1**
(45) Date of publication and mention of the grant of the patent: **18.09.2024**
(21) Application number: 22839095.1
(22) Date of filing: 22.11.2022
(51) Int. Cl.: C09K 8/594, B09B 3/00, B09B 5/00

(54) **PROCESS FOR CARBON CAPTURE AND SEQUESTRATION IN A SUBSURFACE FORMATION BY INJECTION OF LIQUEFIED BIOMASS**
VERFAHREN ZUR KOHLENSTOFFAUFNAHME UND -SEQUESTRIERUNG IN EINER UNTERGRUNDFORMATION DURCH INJEKTION VON VERFLÜSSIGTER BIOMASSE
PROCÉDÉ DE CAPTURE ET DE SÉQUESTRATION DE CARBONE DANS UNE FORMATION SOUTERRAINE PAR INJECTION DE BIOMASSE LIQUÉFIÉE

(30) Priority: 22.11.2021 EP 21209467
(43) Date of publication of application: 04.10.2023
(73) Proprietor: Shell Internationale Research Maatschappij B.V., 2596 HR The Hague (NL)
(72) Inventor: GROENENBOOM, Jeroen, 2288 GK Rijswijk (NL); DE ALMEIDA, Paula, 1031 HW Amsterdam (NL); WEVER, Diego, 1031 HW Amsterdam (NL); VAN BATENBURG, Diederik Willem, 1031HW Amsterdam (NL)
(74) Representative: Shell Legal Services IP
(86) International application number: PCT/US2022/080300
(87) International publication number: WO 2023/092138

(56) References cited:
- WO-A1-2015/042315
- WO-A1-2021/231716
- US-A1- 2013 043 163

## Description

### FIELD OF THE INVENTION

The present invention relates to the field of carbon capture and sequestration (CCS), and, in particular, to a process for CCS in a subsurface formation whereby the carbon is injected in a high-carbon-content liquid form.

### BACKGROUND OF THE INVENTION

The increased demand for energy resulting from worldwide economic growth and development has contributed to an increase in concentration of greenhouse gases in the atmosphere. This has been regarded as one of the most important challenges facing humankind in the 21st century. To mitigate the effects of greenhouse gases (GHG), efforts have been made to reduce the global carbon footprint.

Efforts to mitigate the release of GHG have led to a variety of technologies for CCS (carbon capture and sequestration, or carbon capture and storage) and Negative Emission Technologies. With respect to geologic sequestration, efforts have predominantly been directed towards injecting gaseous or supercritical - close to pure - CO₂ into a subsurface formation.

The use of depleted hydrocarbon reservoirs has been considered for CO₂ storage. One challenge for injecting the CO₂ into the depleted reservoir is related to CO₂ phase behaviour. Expansion of the CO₂ may lead to extremely low temperatures in the well, posing limitations on well design, integrity, and operability, and injectivity as hydrates may form. Alternatively, in case of a strong aquifer, water backfills the porous formation after the hydrocarbons are produced from the reservoir. Accordingly, a significant pressure is required for injecting CO₂ to overcome the water pressure in the formation and limited capacity is available for storage without potential risking caprock integrity. Compression of the gas requires energy with a related GHG footprint.

Another challenge facing the injection of CO₂ is the structure of the subsurface formation. CO₂ is light i.e., less dense than water, and will naturally travel upwardly in the formation because of buoyancy. Therefore, the formation should have a high-quality seal to avoid leak paths that could result in release into the environment. When upward mobility is limited, CO₂ will then migrate laterally potentially encountering additional leaks paths related to lack of closure, faults, or improperly abandoned wells. This presents limitations of where CO₂ can be responsibly injected and necessitates extensive CO₂ monitoring activities for a prolonged period to ensure the CO₂ remains in the subsurface formation.

In parallel to CCS, efforts have also been made to harnessing carbonaceous waste products into a useable product. In particular, in an effort to reduce impact on landfill, potential for forest fires, biological oxygen demand associated with natural conversion of carbonaceous waste, large quantities of biomass waste have been burned or incinerated, contributing to GHG production. Fast pyrolysis of biomass has been presented as a solution to convert biomass to a bio-oil liquid and/or bio-char by the action of heat, typically without any significant level of direct combustion of the biomass feedstock. Hydrothermal liquefaction has been presented as an alternative solution to convert biomass to a liquid and/or bio-char by the action of heat and pressure, in an aqueous environment, without direct combustion of the biomass feedstock. In terms of nutrients, for both solutions, most of the valuable components will reside in the bio-char, and local use of bio-char will avoid long term soil depletion related to traditional biomass export to remote use. The use of bio-char offers an alternative to local biomass burning/recycling for soil enrichment which has a negative GHG footprint.

Ensyn Renewables has a number of patent publications directed to fast thermal processing, for example US5,792,340 (Freel et al., 11 Aug 1998), and rapid thermal processing of biomass, for example US9,102,888B2 (Freel et al., 11 Aug 2015). In these processes, cellulosic biomass is ground and then subjected to a non-catalytic thermal processing to produce a liquid bio-oil and bio-char.

Ruyter et al (US4,670,613, 2 Jun 1987) relates to a hydrothermal liquefaction process for producing hydrocarbon-containing liquids from biomass. Biomass is introduced in the presence of water at a pressure higher than the partial vapor pressure of water at the prevailing temperature into a reaction zone at a temperature of at least 300°C and kept in the reaction zone for more than 30 seconds. Solids are separated from fluid leaving the reaction zone while maintaining the remaining fluid in a single phase, and subsequently liquids are separated from the remaining fluid.

However, the use of liquid bio-oil containing oxygenated organic compounds produced via conventional fast pyrolysis and/or hydrothermal liquefaction is subject to several drawbacks, including, for example, increased chemical reactivity, water miscibility, high oxygen content, and low heating value of the product. Often these products are difficult to upgrade to fungible liquid hydrocarbon fuels with higher energy value, requiring advanced secondary upgrading processes, such as hydrogenation, and external energy input.

WO 2021/231716 A1 discloses a process for carbon capture and sequestration by injection of liquefied biomass in a subsurface formation having a porous medium, the process comprising the steps of:
collecting carbon-containing biomass;
transforming the biomass into a liquid bio-oil containing oxygenated organic compounds; and
injecting the liquid bio-oil into the subsurface formation, thereby sequestering carbon in the subsurface formation.

There remains a need to address the environmental impact of continued burning of biomass waste materials and in addition expand the opportunity for subsurface carbon capture and sequestration to compensate for several centuries of extensive use of biomass and fossil fuel resources that have led to the gradual rise of carbon in the atmosphere.

### SUMMARY OF THE INVENTION

According to one aspect of the present invention, there is provided a process for carbon capture and sequestration by injection of liquefied biomass in a subsurface formation having a porous medium, the process comprising the steps of: transforming a carbon-containing biomass into a liquid bio-oil containing oxygenated organic compounds; determining a liquid bio-oil injection rate based on a parameter selected from the group consisting of viscosity of the liquid bio-oil, in-situ formation pressure, fluid transmissibility of the subsurface formation, mobility of in-situ reservoir fluids, and combinations thereof; and injecting the liquid bio-oil into the subsurface formation via a wellbore in the subsurface formation at an injection pressure sufficient to cause fracturing of a portion of the subsurface formation proximate the wellbore, thereby sequestering carbon in the subsurface formation.

### BRIEF DESCRIPTION OF THE DRAWINGS

The process of the present invention will be better understood by referring to the following detailed description of preferred embodiments and the drawings referenced therein, in which:
Fig. 1 is a flow scheme of one embodiment of the present invention;
Fig. 2 is a flow scheme of another embodiment of the present invention; and
Fig. 3 is a flow scheme of a further embodiment of the present invention.

### DETAILED DESCRIPTION OF THE INVENTION

The present invention provides a process for capturing carbon in the form of biomass waste and transforming the carbon source into a liquid bio-oil. The liquid bio-oil is then injected into a subsurface formation to sequester the carbon therein. The liquid bio-oil is injected at a rate that accounts for one or more of the viscosity of the bio-oil, the in-situ formation pressure, the fluid transmissibility of the subsurface formation, and the mobility of the in-situ reservoir fluids. The liquid bio-oil is injected via a wellbore at an injection pressure sufficient to cause fracturing of a portion of the subsurface formation proximate the wellbore.

The process of the present invention provides for CO₂ capture from the low concentrations in the atmosphere through nature's efficient carbon capture by plants using the photosynthesis process at a lower cost compared to direct air capture required for injection of pure gaseous or supercritical CO₂. A key advantage of the process of the present invention, relative to CO₂ injection, is that the liquid bio-oil does not undergo phase changes and can more easily be stored, transported, and injected, and will remain sequestered into the subsurface through buoyancy.

Furthermore, the liquid bio-oil produced according to the process of the present invention has a density in a range of from 1.1 to 1.3 at 15°C, which density is greater than the density of water. This higher density provides that the liquid bio-oil will not migrate to the surface.

All or a portion of the process of the present invention may be a bolt-on to an existing waste-generating process and/or to an existing facility designed for injecting fluids into the subsurface.

In accordance with the method of the present invention, carbon-containing biomass is collected. Suitable biomass includes, without limitation, agriculture waste, agro-industrial waste, municipal solids waste, forestry waste, and food processing waste. Advantageously, the process of the present invention is readily adaptable to variability in biomass content (for example, due to seasonal changes for a particular source), or changes in biomass source availability. Preferably, the biomass 12 is not an edible foodstuff. Preferably, the biomass 12 is not produced or grown for the sole purpose of being used as a feedstock for the process of the present invention.

Examples of suitable carbon-containing biomass include, without limitation, whole harvest energy crops, round wood, forest slash, bamboo, sawdust, bagasse, sugarcane tops and leaves and trash, cotton stalks, corn stover, corn cobs, castor stalks, Jatropha whole harvest, Jatropha trimmings, de-oiled cakes of palm, castor and Jatropha, coconut shells, residues derived from edible nut, rice husk, rice straw production, animal waste, yard trimmings, pressure-treated wood such as fence posts, plywood), discarded paper and cardboard, waste plastics, along with refractories such as glass, metal.

Another advantage of the process of the present invention is that the transformation of the biomass into a bio-oil neutralizes potentially harmful components that may have been collected with the biomass. Examples of potentially harmful components that may be neutralized include, without limitation, per- and poly-fluorinated alkyl substances, such as perfluorooctanoic sulfonate, and perfluorooctanoic acid.

Where such components are present, conditions, such as temperature, for transforming the bio-oil should be selected to effectively neutralize the particular component. Further measures to treat off-gas and/or collect particulates in a scrubbers may be required depending on the nature of the harmful component, as will be understood by the skilled artisan.

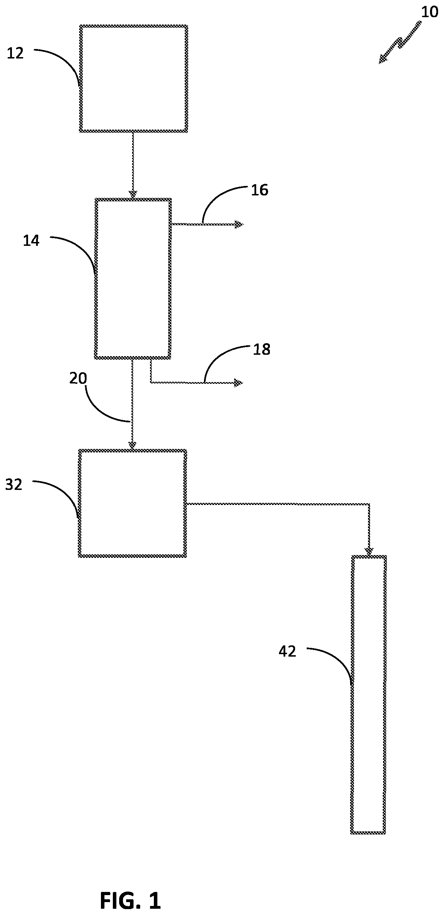

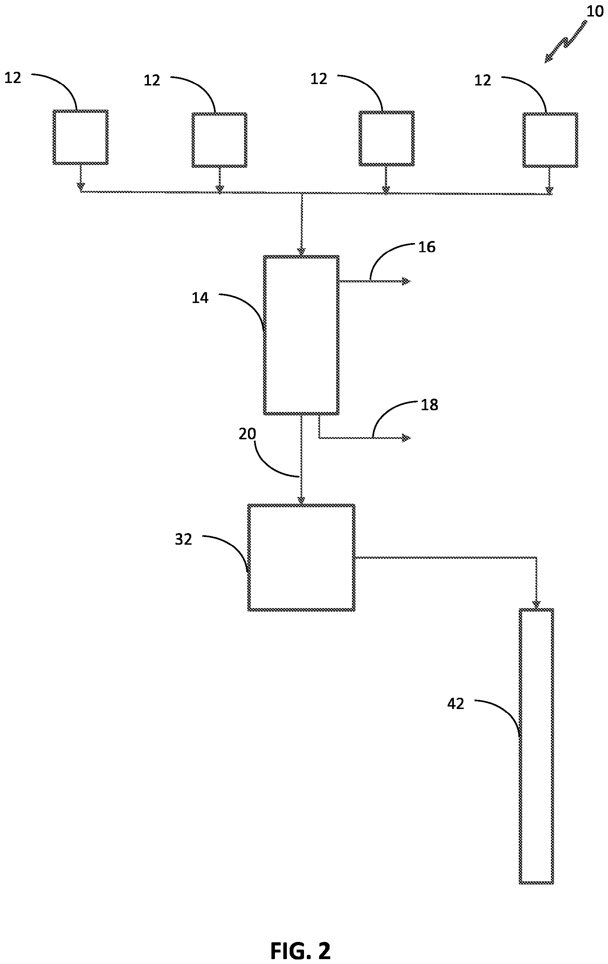

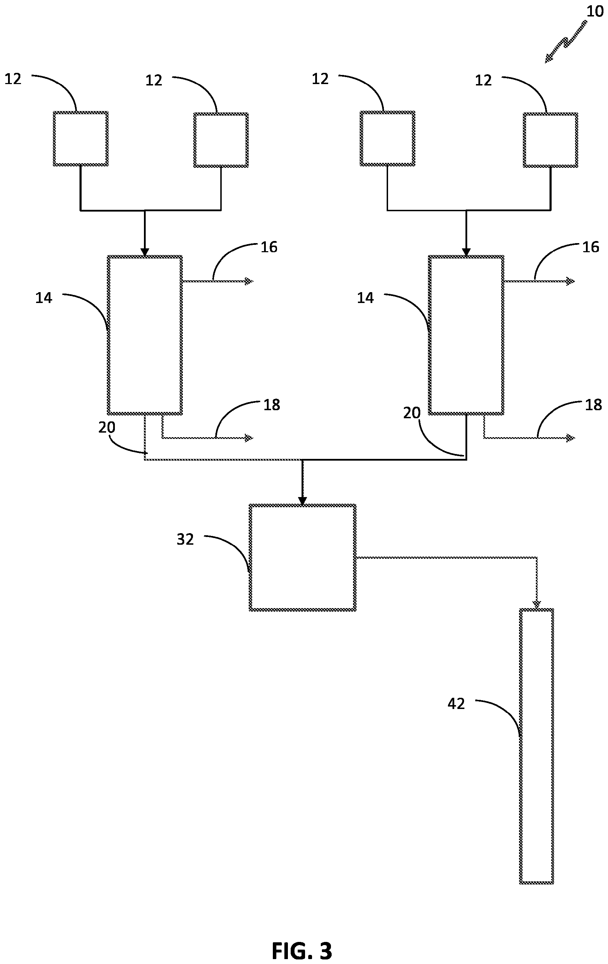

Referring to the drawings, the carbon-containing biomass 12 may be collected at a single location, as depicted in Fig. 1, or at a plurality of locations, as depicted in Figs. 2 and 3.

The biomass 12 is then transformed into a liquid bio-oil. The transformation step 14 may be fast thermal pyrolysis (including rapid thermal processing), hydrothermal liquefaction, and combinations thereof.

Referring to the drawings, the transforming step 14 may be conducted at a single location, as depicted in Figs. 1 and 2, or at a plurality of locations, as depicted in Fig. 3. The transforming step 14 may be conducted at or proximate a collecting site for the biomass 12. Alternatively, or in combination, the transforming step 14 may be conducted proximate the injection site for injecting step 32.

In the transformation step 14, the biomass 12 is pre-treated. For fast pyrolysis, the biomass is chopped, dried and ground. Preferably, the biomass is chopped before drying, for example, to a largest dimension of 15 mm, preferably 10 mm. Preferably, the biomass is dried to a water content of less than or equal to 15 wt.%, more preferably to a water content of less than or equal to 10 wt.%, even more preferably to a water content less than or equal to 5 wt.%. Examples of equipment suitable for drying include, without limitation, rotary dryers, flash dryers, disk dryers, cascade dryers, superheated steam dryers, and combinations thereof. These dryers typically require a heat source and a method of removing evaporated water. Mechanical dryers may also be used, alone or in combination with the heated dryers.

For hydrothermal liquefaction, the biomass 12 can be used without drying, but some grinding is preferred to prepare an aqueous slurry. A higher solids content in the slurry is preferred from an economic standpoint. However, technically, there may be an equipment related challenge to achieve exceedingly high solid contents. For commercial applications, the expectation is that the solids content of the slurry can be greater than or equal to 15 wt.%. Pumpability may limit an upper limit of ≤30 wt.% solids. Preferably, the solids content of the water-based slurry is in a range of from 10 to 20 wt.%, more preferably the solids content is in a range from 15 to 20 wt.%. The aqueous component of the aqueous slurry may be derived from the biomass itself. Optionally, additional water may be provided to reach the desired solids content.

Whether the biomass is subjected to fast thermal pyrolysis or hydrothermal liquefaction, the biomass is preferably ground to provide a majority of particles having a largest dimension preferably less than or equal to 3.5 mm, more preferably less than or equal to 1 mm (largest dimension) or less. The particle size will impact the heat transfer in the process and to achieve high heat transfer rates decomposition of the biomass, it is preferred to have a small particle size.

Ground biomass 12 is then routed to the transformation step 14.

In the case where the transformation step 14 is fast pyrolysis, a pyrolysis reactor is operated at a temperature in a range of from 300 to 700°C, preferably 400 to 600°C. Where certain harmful components are present, the temperature may be selected to effectively neutralize the component. Accordingly, the temperature may be increased to 1000°C or more, depending on the component. The reaction is conducted in the absence of oxygen. Preferably, the pyrolysis reactor is a fluidized bed reactor. More preferably, an inert heat transfer material is provided. The inert heat transfer material may be sand. The biomass 12 has a residence time in a range of from 0.5 to 10 seconds in the pyrolysis reactor and subjected to a heating rate, in a range of from 10 to 200°C/second.

The pyrolysis reactor is preferably provided with a system for removing particulates that are entrained in a gas stream from the reactor. For example, one or more cyclones may be used to receive off-gas and remove particulates therefrom. Scrubbers and/or guard beds may also be advantageously used. In another embodiment, hot gas filter systems, including, for example, candle filters, may be used.

In the case where the transformation step 14 is hydrothermal liquefaction, a liquefaction reactor is operated at a temperature in a range of from 250 to 400°C and a pressure in a range of from 50 to 250 barg (5 - 25 MPag). The biomass 12 has a residence time of from 5 to 15 minutes in the liquefaction reactor.

The products of the transformation step 14 are bio-gas 16, bio-char 18 and liquid bio-oil 20. The yield for each component is dependent on the type of transformation, the feedstock and operating conditions. One example of yield for hydrothermal liquefaction is 30 - 35 wt.% bio-char, 10 - 15 wt.% organic (liquid hydrocarbon) soluble fraction, and 25 - 30 wt.% aqueous fraction, based on the weight of the effluent of the transformation step 14. The organic soluble and the aqueous fractions both have carbon containing compounds in them and therefore, for the present invention, both are preferably used to inject in the subsurface. At least a portion of the water is produced as an emulsion in the liquid bio-oil 20 product. Depending on the operating conditions and properties of the biomass 12, a separate water stream (not shown) may also be produced.

The bio-gas 16 includes CO, H₂, CH₄, CO₂ and light ends.

The liquid bio-oil 20 product generally has properties different from petroleum-derived oil. For example, the liquid bio-oil 20 is generally not miscible with petroleum-derived oil. Liquid bio-oil 20 contains oxygenated compounds that provide a lower heating value. As well, liquid bio-oil 20 tends to be acidic and reactive, which make it unsuitable as a fuel source. Accordingly, without further upgrading, the liquid bio-oil 20 cannot be used directly as transportation fuel. Table 1 provides a comparison of one example of a liquid bio-oil 20 produced according to the present invention with a petroleum-derived fuel oil.

**TABLE 1**

| Analysis | Bio-oil | Fossil-derived Gasoil |
|---|---|---|
| C, dry (wt.%) | 56 | 85 |
| H, dry (wt.%) | 6 | 11.1 |
| O, dry (wt.%) | 38 | 1 |
| Water (wt.%) | 20 - 30 | 0.025 |
| Solids (wt.%) | 0.01 - 0.1 | 0 |
| Ash (wt.%) | 0.01 - 0.2 | 0.01 |
| N (wt.%) | 0 - 0.4 | 0 |
| S (wt.%) | 0 - 0.05 | 0.2 |
| Stability | Unstable | Stable |
| Viscosity @40°C | 13 - 35 | 3.0 - 7.5 |
| Density kg/m³ @15°C | 1.10 - 1.30 | 0.89 |
| Flash Point (°C) | 40 - 110 | 60 |
| Pour Point (°C) | -9 - -36 | -15 |
| LHV (MJ/kg) | 13 - 18 | 40.3 |
| pH | 2 - 3 | Neutral |
| Boiling Range (°C) | Decomposes | 160 - 400 |

In one embodiment of the invention, the liquid bio-oil 20 may be subjected to a separation step (not shown) for separating the liquid bio-oil into a higher-value organic compound that may be further processed into a fuel product or serve as a chemical feedstock, and a lower-value liquid bio-oil that is passed to the subsequent steps of the process of the present invention.

Bio-gas 16 produced in the transformation step 14 is preferably recycled, as a fuel source in the transformation step 14, to another part of the process (e.g., drying biomass 12), and/or for another purpose.

Bio-char 18 produced in the transformation step 14 is advantageously used locally as a mulch and/or a soil enhancer to avoid the slow soil depletion in case of extensive biomass harvesting and export. Any heat retained by the bio-char may be recovered and fed back to the reactor to improve energy efficiency of the process. Potential presence of light ends can be removed by heating.

In accordance with the present invention, liquid bio-oil 20 is routed to an injection system 32.

The liquid bio-oil 20 is then injected into an existing or new well 42 that connects the surface to a subsurface formation having a porous medium. The density of the liquid bio-oil 20 provides pressure to push the fluid into the porous medium of the subsurface formation and/or alternatively a surface pump is utilized to overcome the reservoir pressure.

In a preferred embodiment, a slug of a compatibilizer may be injected to avoid any bio-oil/brine incompatibility and/or precipitation at the wellbore. The slug may be injected periodically in advance of a liquid bio-oil injection. Examples of compatibilizers include, without limitation, alcohols, hydrocarbonates, surfactants, glycerol, glycols, aldehydes. The compatibilizer is miscible with the bio-oil and prevents phase separation (for example, precipitation of solids or separation into one or more highly viscous liquid phase) when in contact with the reservoir fluid. A suitable compatibilizer need not necessarily be miscible with the reservoir fluids, as long as it prevents phase separation of the bio-oil.

In accordance with the present invention, the liquid bio-oil 20 is injected via a wellbore at an injection pressure sufficient to cause fracturing of a portion of the subsurface formation proximate the wellbore. By fracturing the formation, more of the formation is available to the liquid bio-oil and more liquid bio-oil can be effectively sequestered, including potential leak-off of bio-oil into the formation.

The magnitude of the injection pressure will be dependent on a number of distinct factors including viscosity of the liquid bio-oil, in-situ formation pressure, fluid transmissibility of the subsurface formation, mobility of in-situ reservoir fluids, and combinations thereof.

The process of the present invention is particularly advantageous for carbonate formations. The liquid bio-oil of the present invention preferably has a pH in a range of from 2 to 3. By injecting the acidic liquid bio-oil, the carbonate formation may be more readily stimulated to enable a higher injection volume of the liquid bio-oil.

In some embodiments, it may be desirable to ensure that there is a cap-rock and/or fault seal to contain the liquid bio-oil within the subsurface formation. For example, in the case of a carbonate formation, CO₂ may be produced by a reaction of an acidic liquid bio-oil and the carbonate formation. In cases where significant mobile GHG is generated, it is preferred that the presence of a cap-rock and/or seal is present to reduce the chance of CO₂ from migrating to the surface.

As discussed above, a challenge for CO₂ sequestration is the structural containment that is required to provide a seal and trap to impede the upward migration of the CO₂. The process of the present invention advantageously provides a denser liquid bio-oil 20 that will not tend to migrate back to surface. As such, the subsurface formation does not require as tight a seal. Liquid bio-oil 20 fills pores and has a higher carbon storage density vs. pure CO₂ for a wide relevant pressure range.

The liquid bio-oil 20 injection rate is driven by viscosity of the liquid bio-oil 20, the difference between bottom-hole pressure and in-situ formation and fracturing pressure, the fluid transmissibility of the formation, and the mobility of the in-situ reservoir fluids.

The injection system 32 may include additional injection pumps if head pressure provided by the liquid bio-oil 20 is not sufficient for injection rate. This is required in cases where the reservoir pressure is higher than the head pressure provided by the liquid bio-oil, or to reach the desired fracturing pressure.

Advantageously, the subsurface formation may be an oil reservoir - potentially under waterflood operations - or a depleted gas reservoir, where an injection well 42 is already present. The advantage of injecting in existing oil and gas field is that existing infrastructure (facilities and wells) could be re-used for cost efficiency.

In addition to the liquid bio-oil 20 from transformation step 14, other liquid by-products destined for waste disposal solution could be used. Examples are by-products or low-quality fractions from biodiesel production, low-quality oil from pyrolysis and/or hydrothermal liquefaction (that cannot be converted to a high value product). Selection of other liquid carbon carriers will depend on technology availability.

As an example of an alternative application, potentially the disposal could be considered as long-term storage; and depending on uncertainties in the market or technology, part of the liquid bio-oil could potentially be back produced and utilized as feedstock for synthetic fuels or other products.

While the embodiments are described with reference to various implementations and exploitations, it will be understood that these embodiments are illustrative and that the scope of the inventive subject matter is not limited to them. Many variations, modifications, additions and improvements are possible.

## Claims

1. A process for carbon capture and sequestration by injection of liquefied biomass in a subsurface formation having a porous medium, the process comprising the steps of:
transforming a carbon-containing biomass into a liquid bio-oil containing oxygenated organic compounds;
determining a liquid bio-oil injection rate based on a parameter selected from the group consisting of viscosity of the liquid bio-oil, in-situ formation pressure, fluid transmissibility of the subsurface formation, mobility of in-situ reservoir fluids, and combinations thereof; and
injecting the liquid bio-oil into the subsurface formation via a wellbore in the subsurface formation at an injection pressure sufficient to cause fracturing of a portion of the subsurface formation proximate the wellbore, thereby sequestering carbon in the subsurface formation.

2. The process of claim 1, wherein the biomass is transformed into a liquid bio-oil by fast pyrolysis, hydrothermal liquefaction, and combinations thereof.

3. The process of claim 2, wherein the liquid bio-oil is separated into a higher-value organic mixture and a lower-value liquid bio-oil, and wherein the lower-value bio-oil is injected into the subsurface formation.

4. The process of claim 1, wherein the density of the liquid bio-oil is in a range of from 1.1 to 1.3 kg/m³ at 15°C.

5. The process of claim 1, further comprising the step of injecting a slug of compatibilizer before injecting the liquid bio-oil.

6. The process of claim 1, further comprising the step of intermittingly injecting a slug of compatibilizer intermittently with injections of the liquid bio-oil.

7. The process of claim 1, wherein the liquid bio-oil has a pH in a range of from 2 to 3.

8. The process of claim 7, wherein the subsurface formation is a carbonate formation.

9. The process of claim 1, wherein the transforming step further comprises producing bio-char.

10. The process of claim 9, wherein the bio-char is separated from the liquid bio-oil and is provided as a mulch, a soil enhancer, and combinations thereof.

11. The process of claim 1, wherein the carbon-containing biomass is selected from agriculture waste, agro-industrial waste, municipal solids waste, forestry waste, food processing waste, and combinations thereof.

12. The process of claim 1, wherein the transforming step further comprises producing bio-gas.

13. The process of claim 12, wherein the bio-gas is separated from the liquid bio-oil and is recycled as a fuel source.

14. The process of claim 1, further comprising the steps of collecting the carbon-containing biomass, wherein the carbon-containing biomass is collected at a plurality of sites remote from a site where the transforming step is conducted, and transporting the carbon-containing biomass to the site where the transforming step is conducted.

15. The process of claim 1, wherein the transforming step is conducted at a plurality of sites remote from the site where injecting step is conducted, and the process further comprises the step of transporting the liquid bio-oil to the site where the injecting step is conducted.

16. The process of claim 1, wherein the transforming step is conducted proximate the injecting site.

17. The process of claim 1, wherein the subsurface formation is depleted of hydrocarbons.

18. The process of claim 1, wherein the balance of CO₂ results in a net positive CO₂ stream from the atmosphere to the subsurface formation.

## Patentansprüche

1. Verfahren für eine Kohlenstoffabscheidung und - sequestrierung durch Injektion von verflüssigter Biomasse in eine unterirdische Formation, die ein poröses Medium aufweist, das Verfahren umfassend die Schritte:
Umwandeln einer kohlenstoffhaltigen Biomasse in ein flüssiges Bioöl, das sauerstoffhaltige organische Verbindungen enthält;
Bestimmen einer Injektionsrate von flüssigem Bioöl basierend auf einem Parameter, der aus der Gruppe ausgewählt ist, bestehend aus einer Viskosität des flüssigen Bioöls, einem In-situ-Formationsdruck, einer Fluiddurchlässigkeit der unterirdischen Formation, einer Mobilität von In-situ-Reservoirfluiden und Kombinationen davon; und
Injizieren des flüssigen Bioöls in die unterirdische Formation über ein Bohrloch in der unterirdischen Formation mit einem Injektionsdruck, der ausreicht, um ein Brechen eines Teils der unterirdischen Formation in der Nähe des Bohrlochs zu bewirken, wobei dadurch Kohlenstoff in der unterirdischen Formation sequestriert wird.

2. Verfahren nach Anspruch 1, wobei die Biomasse in ein flüssiges Bioöl durch schnelle Pyrolyse, hydrothermale Verflüssigung und Kombinationen davon umgewandelt wird.

3. Verfahren nach Anspruch 2, wobei das flüssige Bioöl in eine höherwertige organische Mischung und ein geringerwertiges flüssiges Bioöl getrennt wird und wobei das geringerwertige Bioöl in die unterirdische Formation injiziert wird.

4. Verfahren nach Anspruch 1, wobei die Dichte des flüssigen Bioöls in einem Bereich von 1,1 bis 1,3 kg/m³ bei 15 °C liegt.

5. Verfahren nach Anspruch 1, ferner umfassend den Schritt des Injizierens eines Stoßes eines Kompatibilisierungsmittels vor dem Injizieren des flüssigen Bioöls.

6. Verfahren nach Anspruch 1, ferner umfassend den Schritt des intermittierenden Injizierens eines Stoßes des Kompatibilisierungsmittels intermittierend mit den Injektionen des flüssigen Bioöls.

7. Verfahren nach Anspruch 1, wobei das flüssige Bioöl einen pH-Wert in einem Bereich von 2 bis 3 aufweist.

8. Verfahren nach Anspruch 7, wobei die unterirdische Formation eine Karbonatformation ist.

9. Verfahren nach Anspruch 1, wobei der Umwandlungsschritt ferner ein Produzieren von Biokohle umfasst.

10. Verfahren nach Anspruch 9, wobei die Biokohle von dem flüssigen Bioöl getrennt und als ein Mulch, ein Bodenverbesserer oder Kombinationen davon bereitgestellt wird.

11. Verfahren nach Anspruch 1, wobei die kohlenstoffhaltige Biomasse aus landwirtschaftlichen Abfällen, agroindustriellen Abfällen, festen Siedlungsabfällen, forstwirtschaftlichen Abfällen, Abfällen aus der Lebensmittelverarbeitung und Kombinationen davon ausgewählt wird.

12. Verfahren nach Anspruch 1, wobei der Umwandlungsschritt ferner das Produzieren von Biogas umfasst.

13. Verfahren nach Anspruch 12, wobei das Biogas von dem flüssigen Bioöl getrennt ist und als eine Brennstoffquelle wiederverwertet wird.

14. Verfahren nach Anspruch 1, ferner umfassend die Schritte eines Sammelns der kohlenstoffhaltigen Biomasse, wobei die kohlenstoffhaltige Biomasse an einer Vielzahl von Orten gesammelt wird, die von einem Ort entfernt sind, an dem der Umwandlungsschritt durchgeführt wird, und eines Transportierens der kohlenstoffhaltigen Biomasse zu dem Ort, an dem der Umwandlungsschritt durchgeführt wird.

15. Verfahren nach Anspruch 1, wobei der Umwandlungsschritt an einer Vielzahl von Orten durchgeführt wird, die von dem Ort entfernt sind, an dem der Injektionsschritt durchgeführt wird, und wobei das Verfahren ferner den Schritt des Transportierens des flüssigen Bioöls zu dem Ort umfasst, an dem der Injektionsschritt durchgeführt wird.

16. Verfahren nach Anspruch 1, wobei der Umwandlungsschritt in der Nähe der Injektionsorts durchgeführt wird.

17. Verfahren nach Anspruch 1, wobei die unterirdische Formation an Kohlenwasserstoffen verarmt ist.

18. Verfahren nach Anspruch 1, wobei der Ausgleich von CO₂ zu einen positiven Netto-CO₂-Strom von der Atmosphäre zu der unterirdischen Formation führt.

## Revendications

1. Procédé de capture et de séquestration du carbone par injection de biomasse liquéfiée dans une formation souterraine comportant un milieu poreux, le procédé comprenant les étapes consistant à :
transformer une biomasse contenant du carbone en une biohuile liquide contenant des composés organiques oxygénés ;
déterminer un débit d'injection de biohuile liquide en fonction d'un paramètre choisi dans le groupe constitué par viscosité de la biohuile liquide, pression de la formation in situ, transmissibilité des fluides de la formation souterraine, mobilité des fluides du réservoir in situ, et des combinaisons de celles-ci ; et
injecter la biohuile liquide dans la formation souterraine par l'intermédiaire d'un puits dans la formation souterraine à une pression d'injection suffisante pour provoquer la fracturation d'une partie de la formation souterraine à proximité du puits, séquestrant de ce fait le carbone dans la formation souterraine.

2. Procédé selon la revendication 1, dans lequel la biomasse est transformée en biohuile liquide par pyrolyse rapide, liquéfaction hydrothermale et des combinaisons de celles-ci.

3. Procédé selon la revendication 2, dans lequel la biohuile liquide est séparée en un mélange organique de valeur supérieure et une biohuile liquide de valeur inférieure, et dans lequel la biohuile de valeur inférieure est injectée dans la formation souterraine.

4. Procédé selon la revendication 1, dans lequel la masse volumique de la biohuile liquide est dans une plage de 1,1 à 1,3 kg/m³ à 15 °C.

5. Procédé selon la revendication 1, comprenant en outre l'étape consistant à injecter un bouchon d'agent de compatibilité avant l'injection de la biohuile liquide.

6. Procédé selon la revendication 1, comprenant en outre l'étape consistant à injecter par intermittence un bouchon d'agent de compatibilité par intermittence avec des injections de la biohuile liquide.

7. Procédé selon la revendication 1, dans lequel la biohuile liquide a un pH dans la plage de 2 à 3.

8. Procédé selon la revendication 7, dans lequel la formation souterraine est une formation de carbonate.

9. Procédé selon la revendication 1, dans lequel l'étape de transformation comprend en outre la production de biocharbon.

10. Procédé selon la revendication 9, dans lequel le biocharbon est séparé de la biohuile liquide et est fourni sous forme de paillis, d'agent améliorant de sol, et des combinaisons de ceux-ci.

11. Procédé selon la revendication 1, dans lequel la biomasse contenant du carbone est choisie parmi les déchets agricoles, les déchets agro-industriels, les déchets solides municipaux, les déchets forestiers, les déchets de transformation des aliments, et des combinaisons de ceux-ci.

12. Procédé selon la revendication 1, dans lequel l'étape de transformation comprend en outre la production de biogaz.

13. Procédé selon la revendication 12, dans lequel le biogaz est séparé de la biohuile liquide et est recyclé en guise de source de combustible.

14. Procédé selon la revendication 1, comprenant en outre les étapes consistant à collecter la biomasse contenant du carbone, dans lequel la biomasse contenant du carbone est collectée au niveau d'une pluralité de sites éloignés d'un site où se déroule l'étape de transformation, et à transporter la biomasse contenant du carbone vers le site où se déroule l'étape de transformation.

15. Procédé selon la revendication 1, dans lequel l'étape de transformation se déroule au niveau d'une pluralité de sites éloignés du site où se déroule l'étape d'injection, et le procédé comprend en outre l'étape consistant à transporter la biohuile liquide vers le site où se déroule l'étape d'injection.

16. Procédé selon la revendication 1, dans lequel l'étape de transformation se déroule à proximité du site d'injection.

17. Procédé selon la revendication 1, dans lequel la formation souterraine est appauvrie en hydrocarbures.

18. Procédé selon la revendication 1, dans lequel l'équilibre du CO₂ a pour résultat un courant net positif de CO₂ de l'atmosphère à la formation souterraine.
